# EUROPEAN PATENT APPLICATION

(11) **EP 4 063 248 A1**
(43) Date of publication of application: **28.09.2022**
(21) Application number: 22163760.6
(22) Date of filing: 23.03.2022
(51) Int. Cl.: B62K 7/02, B60N 2/28, A47D 13/02, A47D 13/10, B62B 7/14, B62B 9/18

(54) **CAR SEAT ADAPTOR**

(30) Priority: 26.03.2021 NL 2027845
(71) Applicant: Koninklijke Gazelle N.V., 6951 BP Dieren (NL)
(72) Inventor: Hofs, Richard, 6951 BP Dieren (NL); Brand, Loek, 6951 BP Dieren (NL); van Diepen, Bart Gerardus Dirk, 6951 BP Dieren (NL)
(74) Representative: De Vries & Metman

(57) **Abstract**

Car seat adaptor (1), in particular for mounting a portable car seat in a cargo bike. The adaptor comprises a support frame (2) with two parallel supports (3), and a pair of couplers (5), both supports being provided with one of the couplers and with a spring suspension (6) between the coupler and the respective support.

## Description

The invention relates to a car seat adaptor, e.g., for coupling a portable car seat to a cargo bike or similar vehicle.

Portable car seats, such as Maxi-Cosi^{®} car seats, have universal connector interfaces for engaging adaptors for use on a pram, a pushchair, a cargo bike or similar vehicle. WO 2017/013577 discloses such a car seat adaptor mounted in the cargo box of a cargo bike. This prior art car seat adaptor comprises two standing supports with top ends having fasteners adapted to engage the connector elements of the car seat. Increasing robustness of such an adaptor will reduce its shock absorbing capacity, making it safer but less comfortable for a child using the car seat.

It is an object of the invention to provide a car seat adaptor allowing to couple a car seat to a vehicle with increased safety and driving comfort.

The object of the invention is achieved with a car seat adaptor comprising a support frame with two parallel supports and a pair of couplers, both supports being provided with one of the couplers, with a spring suspension between the coupler and the respective support. The couplers can be provided with the universal car seat connection means used for most portable child car seats, e.g., latches providing a snap-fit connection. The carrier supports the car seat at two positions with a spring suspension. This significantly improves driving comfort for a child seated in the car seat.

In a specific embodiment, the parallel supports have tubular parts, for example at the top ends. In such an embodiment, the spring suspensions can comprise:
- a core slidably received in the tubular part of the respective support, the core being mounted to the respective coupler; and
- a spring with a lower end connected to the core and an upper end fixed relative to the associated support. The weight of a child in the car seat will load the spring, for instance in addition to a possible pretension load.

In a specific embodiment, the spring is a tension spring that can be tensioned in a tension direction, and the coupler, the core and the tubular part of the respective support form a sliding guide that allows sliding movement of the coupler relative to the support only in said tension direction. The cores of the spring suspensions guide sliding movement of the couplers relative to the support in a sliding direction coinciding with the longitudinal direction of the supports, contributing to improved damping of this relative movement.

The spring allows balancing of the child's weight and impact loads during transport. The spring rate or spring stiffness of the spring can for example be in the range of about 1 to about 2 N/mm.

Optionally, the spring can be pretensioned, in particular to provide a substantially constant spring rate over the working range of the spring at least during normal use of the car seat adaptor. This controls movement of the child and the car seat and limits movement to a spring expansion of about 40 mm.

A compact arrangement is achieved if the cores have a hollow, e.g., C-shaped cross section enclosing the respective spring. The core and the spring may for example have a length extending in longitudinal direction of the tubular support.

The cores may for example comprise a slot, while the support comprises a shaft, such as a bolt, extending through the slot. The spring can be suspended to the shaft. The shaft can for example radially cross the tubular end of the support. The shaft can for example have an outer end forming the stop for limiting sliding movement of the coupler, the stop being slidable in the sliding direction within a chamber of the coupler. To this end the chamber will have a length in the sliding direction which is shorter than the length of the slot in the core of the spring suspension. This shaft can for example be a bolt with one end carrying a nut forming the stop.

In a specific embodiment, both couplers have a lower end slidably receiving the top end of the associated support and a top end comprising connection elements functionally matching with connecting elements of a car seat. To cover the support ends, the lower ends of the couplers may for example comprise two sections jointly fitting around the top end of the associated support. Covering the tubular ends provides an integrated design and contributes to a stable guiding of the sliding movement. Guiding of the sliding movement can be further improved if one of the sections of the coupler has an annular part slidably receiving the tubular top end of the respective support.

The couplers can for example be of a suitable plastic, the sections being joint by means of a snap-fit.

In a specific embodiment, the support frame can a tubular frame. For example the two supports can be tubular over their full length and be bridged at their lower ends by a transversal tube of a length corresponding to the width of the car seat. The support frame can be an integral or bolted part of a vehicle, e.g., of an inner wall of a cargo box of a cargo bike. To this end, bolts can be used having a head with a lower edge received in a matching recess of a washer, to shield sharp edges of the bolt and to increase child safety. The washer can be a saddle washer, with a lower side following the contour of the respective support tube.

The car seat carrier is particularly useful for coupling a car seat in a cargo box of a cargo bike, a normal bike or trike, or a similar vehicle, such as a pram or pushchair.

The invention will now be further explained with reference to the accompanying drawings, showing an exemplary embodiment of a car seat adaptor.
- Figure 1:: shows a car seat adaptor according to the invention in perspective view;
- Figure 2:: shows one of the couplers of the car seat adaptor in exploded view;
- Figure 3:: shows a spring suspension of the coupler of Figure 2;
- Figure 4:: shows the spring suspension of Figure 3 from another viewing angle;
- Figure 5:: shows the coupler with one section broken away;
- Figure 6:: shows in detail the connection to a vehicle;
- Figure 7:: shows a cargo bike comprising the car seat adaptor.

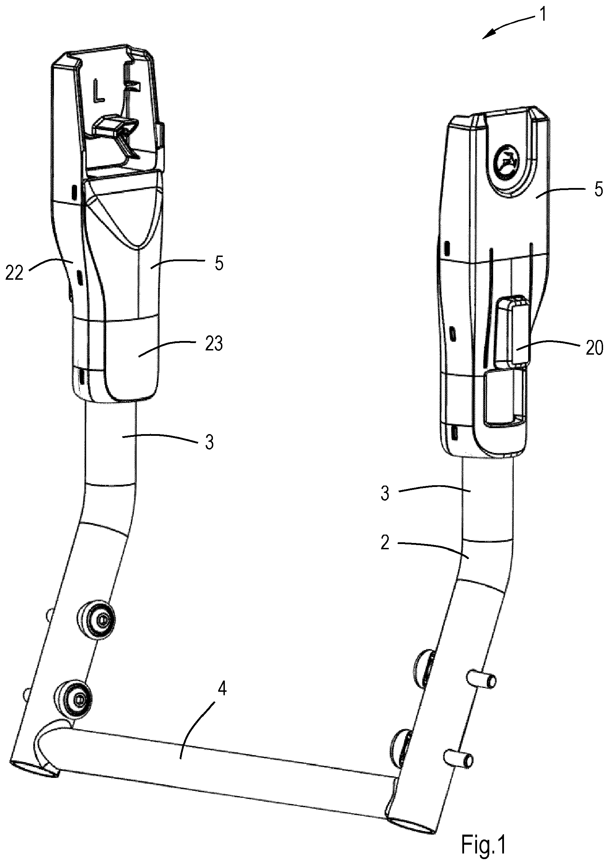

Figure 1 shows a car seat adaptor 1 comprising a tubular support frame 2 with two parallel and symmetrically arranged upstanding tubular supports 3. The tubular supports 3 have lower ends bridged by a transversal tube 4. The top ends of the two supports 3 are capped by respective couplers 5 configured to connect to a universal connection mechanism used with most child car seats, such as those of Maxi-Cosi^{®}. The car seat adaptor 1 has a symmetrical build-up so the two couplers 5 have similar but mirrored configurations, just as the two supports 3.

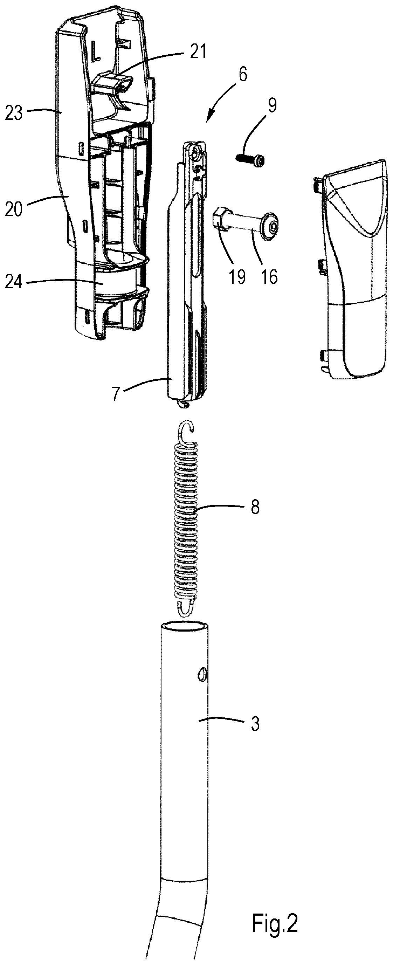

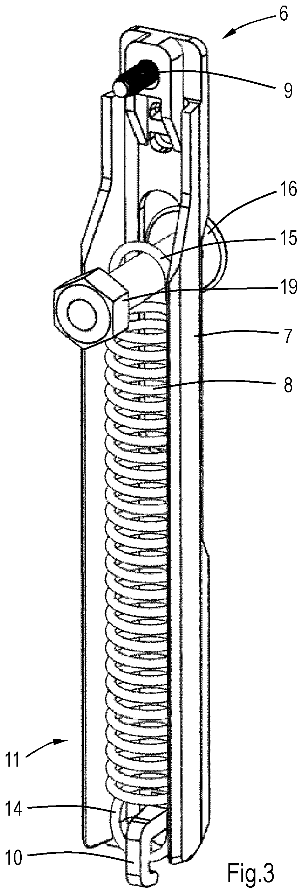

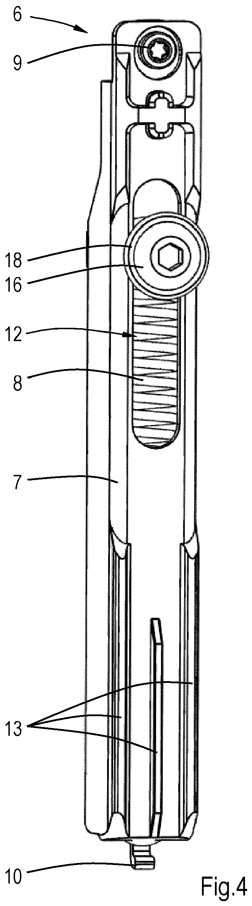

The two couplers 5 are connected to the supports 3 by means of a spring suspension 6, as shown in Figures 2, 3 and 4. The spring suspension 6 comprises a core 7 and a tension spring 8, jointly received within the tubular top end of the support 3. The top end of the core 7 is fixed to the respective coupler 5 by means of a bolt 9 at an inner side of the coupler 5. The lower end of the core 7 has a hook 10. Between the bolt 9 and the hook 10, the core 7 has a substantially C-shaped cross section with an open side 11 (Figure 3) providing access for positioning the spring 8. The core 7 is also provided with a slot 12 (Figure 4) opposite to the open side 11 and extending in a longitudinal direction of the core 7 between a point near the bolt 9 and a point about halfway the length of the core 7. Vertically extending ribs 13 (Figure 4) space the core 7 from the inner wall of the tubular support 3 and serve to provide a low clearance sliding guide.

The spring 8 is contained in the C-shaped cross section of the core 7. The spring 8 has a lower end with a loop 14 hooked to the hook 10 of the core 7 and a top end with a loop 15 suspended to a bolt 16 extending radially through bores 17 (Figure 2) in the tubular support 3 crossing the slot 12 of the core 7. The bolt 16 has a bolt head 18 at one side of the support 3, and a threaded part carrying a nut 19 at an opposite side of the support 3.

With this construction, the lower end of the spring 8 moves with the core 7 and the coupler 5, while the top end of the spring 8 is fixed relative to the support 3. As a result, the couplers 5 can resiliently move up and down relative to the support 3.

The spring can be balanced with the child's weight and impact loads during transport. Spring rate and pretension can for example be selected to limit spring expansion to about 40 mm.

The nut 19 is slidably contained in a closed chamber 20 of the coupler 5, visible as a protruding box part on the outside of the coupler 5. The length of the chamber 20 is slightly shorter than the length of the slot 12, so the nut 19 serves as a stop or a sliding limiter.

Both couplers 5 have a lower end slidably receiving the tubular top end of the associated support 3 with the nut 19, and a top end comprising universal connection elements 21 matching with the usual connecting elements of a car seat. At their lower ends, the couplers 5 comprise two sections 22, 23 jointly fitting around the top end of the associated support 3. The two sections 22, 23 are coupled by a snap fit connection extending along a vertical plane and are typically made of an injection moulded plastic. The two sections 22, 23 include a main section 22 with the connection elements 21, and a cap section 23. The main section 22 is fixed to the core 7 and contains the chamber 20 covering the nut 19. The cap section 23 connects to a lower half of the main section 22 in order to cover the top end of the tubular support 3 and the bolt head 19, so as to hide these from view.

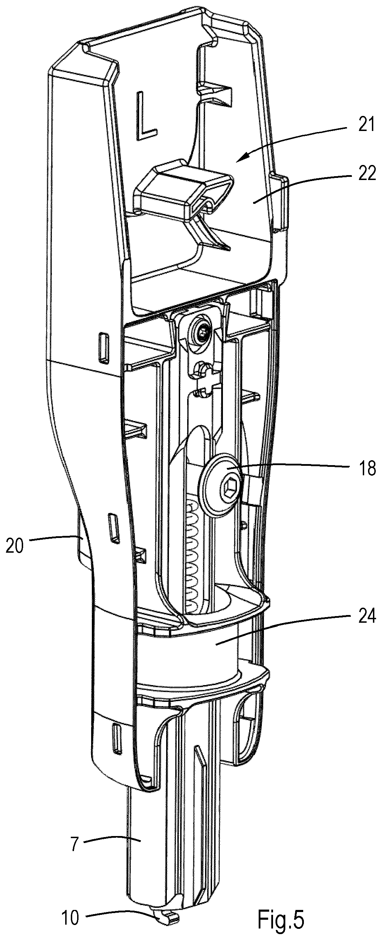

The main section 23 has an annular part 24 (Figure 5) slidably receiving the tubular top end of the respective support 3, so as to provide further guiding for proper joint sliding movement of the two couplers 5.

In the assembled state, the cap sections 23 of the couplers 5 face each other, just as the universal connection elements 21, while the protruding chambers 20 encasing the nuts 19 point away from each other. In this position of the couplers 5, a car seat provided with the matching universal connection means can easily be clicked onto the couplers 5.

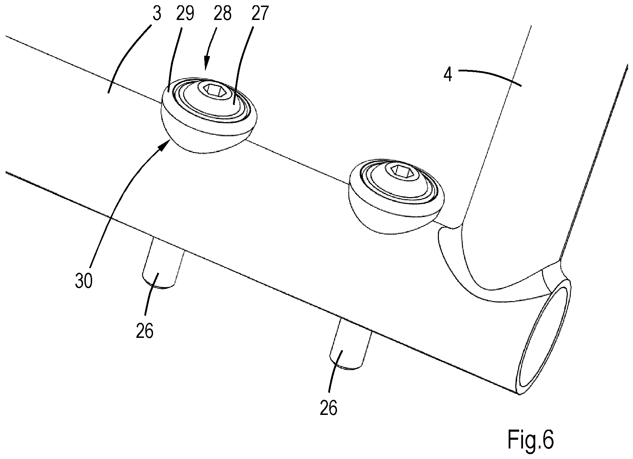

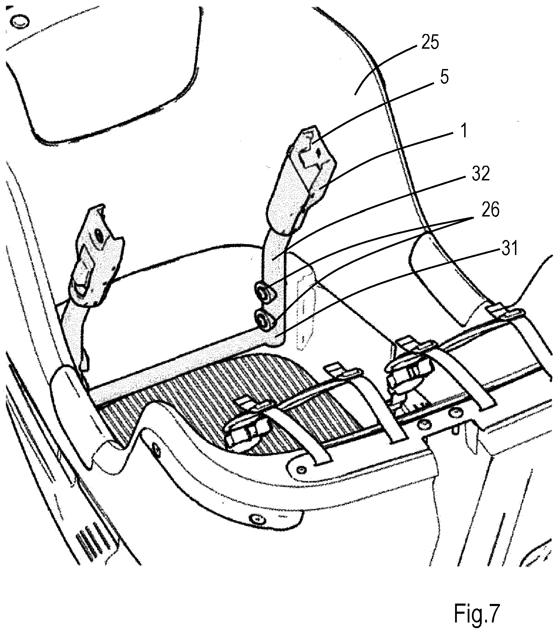

The support frame 2 can be bolted to a vehicle, e.g., to an inner wall of a cargo box 25 of a cargo bike, as shown in Figure 7. The frame 2 is mounted using a number of allen screw bolts 26, shown in detail in Figure 6. To optimize child safety, each allen screw bolt 26 has a head 27 with a lower edge received in a matching recess 28 of a saddle washer 29. The saddle washer 29 has a lower edge 30 following the surface curvature of the tubular support 3. The saddle washer 29 can for example be made of an elastomeric or plastic material.

The two supports 3 of the tubular frame 2 are slightly kinked at an obtuse angle. The car seat adaptor 1 is mounted in the cargo box 25 in a position that the lower ends 31 of the supports 3 are substantially vertical, while the kinked upper ends 32 are directed slightly forward, e.g., slightly towards a steer of the cargo bike. In this position a car seat can easily be clicked upon the car seat adaptor 1 with the sitting child facing the driver.

The terms "upward", "downward", "below", "above", "top", "lower", "vertical" and the like relate to the position of the respective parts in an assembled state of the car seat adaptor 1 during normal use.

## Claims

1. Car seat adaptor (1) comprising a support frame (2) with two parallel supports (3), and a pair of couplers (5), both supports being provided with one of the couplers and with a spring suspension (6) between the coupler and the respective support.

2. Car seat adaptor according to claim 1, wherein at least one of the spring suspensions comprises:
- a core (7) slidably received in a tubular part of the respective support, the core being mounted to the respective coupler; and
- a spring (8) with one end (14) connected to the core and an opposite end (15) fixed relative to the associated support (3).

3. Car seat adaptor according to claim 2, wherein the spring is a tension spring that can be tensioned in a tension direction, and wherein the coupler (5), the core (7) and the tubular part of the respective support (3) form a sliding guide that allows sliding movement of the coupler (5) relative to the support only in said tension direction.

4. Car seat adaptor according to claim 3, wherein the tension spring has a spring rate or stiffness of about 1 to about 2 N/mm.

5. Car seat adaptor according to claim 4, wherein the spring is pretensioned.

6. Car seat adaptor according to claim 2, 3, 4 or 5, further comprising a stop (19, 20) limiting sliding movement of the coupler (5) relative to the support (3).

7. Car seat adaptor according to claim 2, 3, 4, 5 or 6, wherein the core (7) has a hollow, e.g., C-shaped cross section at least partly enclosing the spring (8).

8. Car seat adaptor according to claim 7, wherein the core (7) has a slot (12) and the support comprises a shaft (16), such as a bolt, extending through the slot (12), and wherein the spring (8) is suspended to the shaft (16).

9. Car seat according to claim 8, wherein the shaft (16) crosses the support (3) and has an outer end forming the stop (19) for limiting sliding movement of the coupler (5), the stop being slidably encased in a chamber (20) of the coupler (5).

10. Car seat adaptor according to claim 9, the shaft being a bolt (16) and the stop being a nut (19).

11. Car seat adaptor according to any one of the preceding claims, wherein both couplers (5) have a lower end receiving and guiding the associated support (3), and a top end comprising connection elements (21) functionally matching with connecting elements of a car seat.

12. Car seat adaptor according to claim 11, wherein the couplers (5) comprise two sections (22, 23) jointly fitting around the top end of the associated support (3).

13. Car seat adaptor according to claim 12, wherein one of the sections (22, 23) of the coupler (5) has an annular part (24) slidably receiving the tubular top end of the respective support (3).

14. Car seat adaptor according to any one of the preceding claims, wherein the support frame (2) is an integral or bolted part of a vehicle, e.g., of an inner wall of a cargo box (25) of a cargo bike.

15. Car seat adaptor according to claim 14, wherein the support frame is bolted by means of fasteners, each fastener having a head with a lower edge received in a matching recess (28) of a washer (29), in particular a saddle washer.

16. Cargo bike with a cargo box (25) provided with a car seat adaptor according to any one of the preceding claims.
